# EUROPEAN PATENT SPECIFICATION

(11) **EP 2 371 642 B1**
(45) Date of publication and mention of the grant of the patent: **14.11.2012**
(21) Application number: 11159191.3
(22) Date of filing: 22.03.2011
(51) Int. Cl.: B60T 13/66, B60T 13/68, B60T 15/04, B60T 15/54, F15B 13/04

(54) **Flow adjustment device and brake ciruit including such a flow adjustment device**
Strömungsregler und Bremskreis mit Strömungsregler
Appareil de régulation de flux et circuit de commande de frein avec appareil de régulation de flux

(30) Priority: 24.03.2010 IT MO20100083
(43) Date of publication of application: 05.10.2011
(73) Proprietor: Studio Tecnico 6 M S.R.L., 41123 Modena (IT)
(72) Inventor: Mamei, Andrea, 41123 Modena (IT); Mamei, Enrico, 41123 Modena (IT); Mamei, Eronne, 41123 Modena (IT)
(74) Representative: Modiano, Micaela Nadia

(56) References cited:
- WO-A1-98/09857
- WO-A1-2009/016167
- US-A1- 2006 138 856

## Description

The present invention relates to a flow adjustment device.

With reference in particular but not exclusively to the sector of braking systems of work vehicles, it is known that generally they are provided with so-called negative brakes, in which the friction elements are kept engaged by springs and are instead released by the action of hydraulic cylinders.

These vehicles are generally provided with separate circuits for actuating parking braking and service braking, and devices for emergency braking must also be provided.

In particular, circuits for parking braking are essentially of two types.

In a first case they use a three-way, two-position valve (of the on-off type), which in a first working configuration allows to connect a power accumulator to the cylinder in order to obtain the release of the brake, while in a second working configuration it allows to connect such cylinder to the discharge so as to reactivate the brake.

In vehicles provided with this type of circuit, emergency braking may be obtained by inserting a suitable control of the hydrostatic transmission, if provided, or, if possible, by installing a dedicated additional circuit.

It is therefore evident that equipping this type of vehicle with appropriate devices adapted to allow emergency braking entails a considerable level of complexity and/or may be completely uneconomical.

As an alternative, circuits for parking braking are known which are provided with proportional valves, in which the braking power varies in relation to the position assumed by the actuation element of the valve itself, and which allow to manage emergency braking as well.

WO 2009/016167 A1 describes a state of the art braking circuit.

However, even this solution is rather expensive and therefore not applicable on certain vehicles for economic reasons and due to rather difficult use in emergency conditions, because it requires considerable sensitivity and experience on the part of the operator and does not offer sufficient assurances of safety.

In fact, during sudden braking the body of the operator tends to be pushed forward due to the effect of inertia, with the risk that the actuation element, generally a lever, of the proportional valve is moved to a position that does not correspond to an optimum braking power for that situation.

Moreover, because of the delay in the response of the circuit, in emergency conditions the operator might be led to actuate the actuation element of the proportional valve so as to request a braking power that is greater than the one actually needed, causing the lockup of the vehicle, with the consequent risk of overturning or of loads falling.

The aim of the present invention is to eliminate the drawbacks cited above of the background art, by devising a flow adjustment device that allows to reduce the installation costs and is flexible in application, both in already existing circuits, by increasing their functionality, and in newly provided circuits.

Within this aim, an object of the present invention is to provide a flow adjustment device which can be applicable within circuits for actuating negative brakes so as to allow to manage both parking braking and emergency braking with low costs and a high level of safety.

Another object of the present invention is to provide a flow adjustment device which can be immediately usable by operators, without requiring training or particular experience thereof.

Another object of the present invention is to obtain a predetermined response of the service that it adjusts and therefore to guarantee the safety of the assigned operators and of the work environments.

Another object of the present invention is to have a structure that is simple, relatively easy to provide in practice, safe in use, effective in operation and of relatively low cost.

This aim and these and other objects which will become better apparent hereinafter are achieved by the present flow adjustment device comprising a distribution valve that comprises a valve body provided with a seat, which movably accommodates flow control means, with an intake port, which can be associated with means for supplying a working fluid, with at least one discharge port, which can be associated with means for discharging said working fluid and with a service port, which can be associated with a user device with a fluid medium, said ports being connected to said seat, and actuation means for actuating the movement of said flow control means within said seat, the flow control means being adapted to assume alternately at least one first working position, in which they allow the connection of said intake port and said service port, and a second working position, in which they allow the connection of said service port and of said at least one discharge port, so as to obtain direct connection to said discharge means, characterized in that said distribution valve is of the type with three working positions, a third working position being also provided in which said flow control means allow the connection of said service port to said at least one discharge port so as to obtain connection to said discharge means by passing through a pressure adjustment valve, which is associated with said distribution valve upstream or downstream of said at least one discharge port.

Further characteristics and advantages of the present invention will become better apparent from the following detailed description of some preferred but not exclusive embodiments of a flow adjustment device, illustrated by way of non-limiting example in the accompanying drawings, wherein:
Figure 1 is a schematic circuit diagram of a first embodiment of the device according to the invention inserted in a circuit for parking/emergency braking of a work vehicle;
Figures 2 to 4 are schematic circuit diagrams, like Figure 1, with different embodiments of the actuation means of the device according to the invention;
Figures 5, 6 and 7 are schematic circuit diagrams, like Figure 1, of the device according to the invention associated with a further embodiment of the corresponding actuation means, respectively in the first, third and second working position;
Figures 8, 9 and 10 are partially sectional schematic views of a possible embodiment of the device according to the invention according to the circuit diagrams of Figures 5, 6 and 7, respectively in the first, third and second working position;
Figure 11 is a schematic circuit diagram of a second embodiment of the device according to the invention inserted in a circuit for parking/emergency braking of a work vehicle;
Figure 12 is a schematic plan view of a possible embodiment of the device according to the invention according to the circuit diagram of Figure 11 in the first working position;
Figure 13 is a partially sectional schematic view of the device of Figure 12 in the first working position;
Figures 14, 15 and 16 are respective partially sectional views, like Figure 12, but with the device according to the invention in successive configurations that correspond to the third working position;
Figure 17 is a partially sectional schematic view, like Figure 12, but with the device according to the invention in the second working position.

With reference to the figures, a flow adjustment device is generally designated by the reference numeral 1.

The device 1 comprises a distribution valve 2, which comprises a valve body 3 provided with a seat 4, which movably accommodates flow control means 5, with an intake port 6, which can be associated with means A for supplying a working fluid, preferably a liquid such as hydraulic oil, with at least one discharge port 7, which can be associated with means S for discharging the working fluid, and with a service port 8, which can be associated with a user device U with a fluid medium, the ports being arranged facing along the seat 4 and connected to it.

In the figures, the device 1 is illustrated, by way of non-limiting example, inserted in a braking circuit F of a conventional work vehicle, with the intake port 6 associated with a supply pump A through a first work duct C₁, the at least one discharge port 7 associated with a discharge tank S through a second work duct C₂ and the service port 8 connected to the pressure chamber of a cylinder U for locking a negative brake, which is associated with its stem, is not illustrated and is usually kept locked by the action of a spring M. The service port 8 is connected to the cylinder U by means of a third work duct C₃.

The device 1 comprises, moreover, actuation means 9 for the movement of the flow control means 5 inside the seat 4; the flow control means 5 in fact are adapted to assume alternately at least one first working position, in which they allow the connection of the intake port and the service port, respectively 6 and 8, and a second working position, in which they allow the connection of the service port and the discharge port, respectively 8 and 7, for direct connection to the discharge means S.

In the illustrated application, the first working position corresponds to the brake released condition and, therefore, to the travel condition of the work vehicle, while the second working position corresponds to the parking braking condition.

The distribution valve 2 is of the type with three working positions, a third working position being provided in which the flow control means 5 are arranged inside the seat 4 so as to allow the connection between the service port 8 and the at least one discharge port 7 so as to obtain the connection to the discharge means S by passing through a pressure adjustment valve 10, which is associated with the distribution valve 2 and is arranged upstream or downstream of such discharge port, with respect to the direction of the flow of the working fluid.

The adjustment valve 10 is of the conventional type and is preferably settable so as to adjust the value of the residual pressure at the user device U so that it closes, interrupting the connection between the service port 8 and the discharge means S.

Moreover, the adjustment valve 10 is preferably of the piston type, in order to allow the functional advantages explained hereinafter; however, different embodiments of such valve are not excluded.

If the device 1 is applied to the circuit F, the third working position of the distribution valve 2 corresponds to the emergency braking condition and the adjustment valve 10 allows to guarantee a preset braking power in emergency conditions, avoiding the occurrence of dangerous situations.

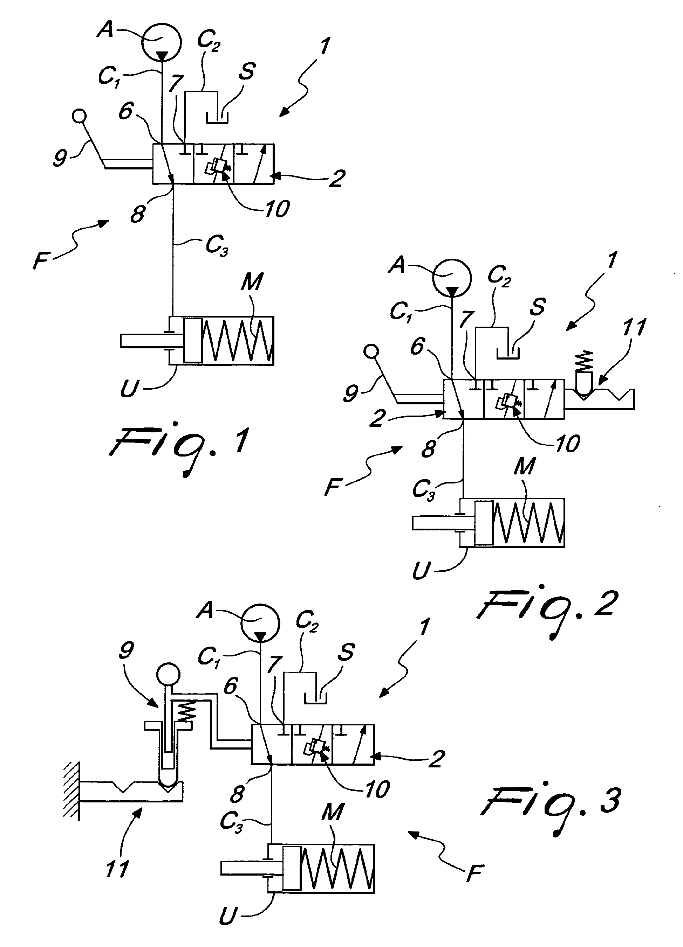

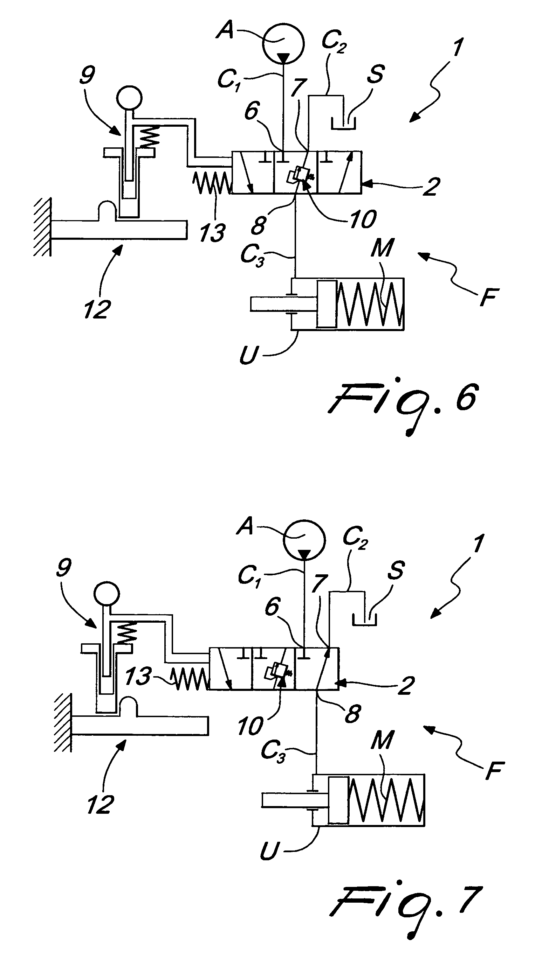

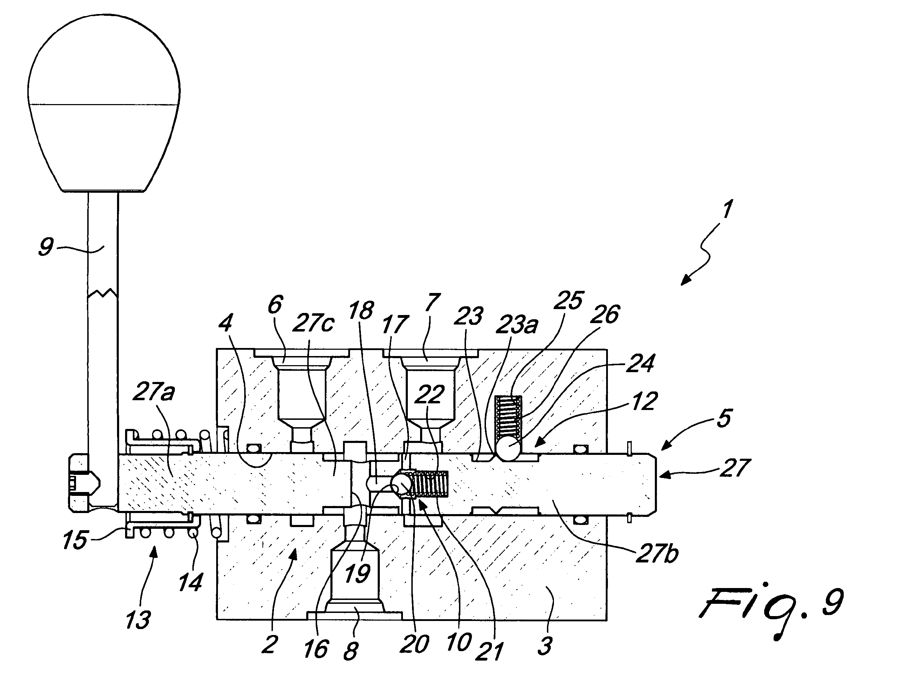

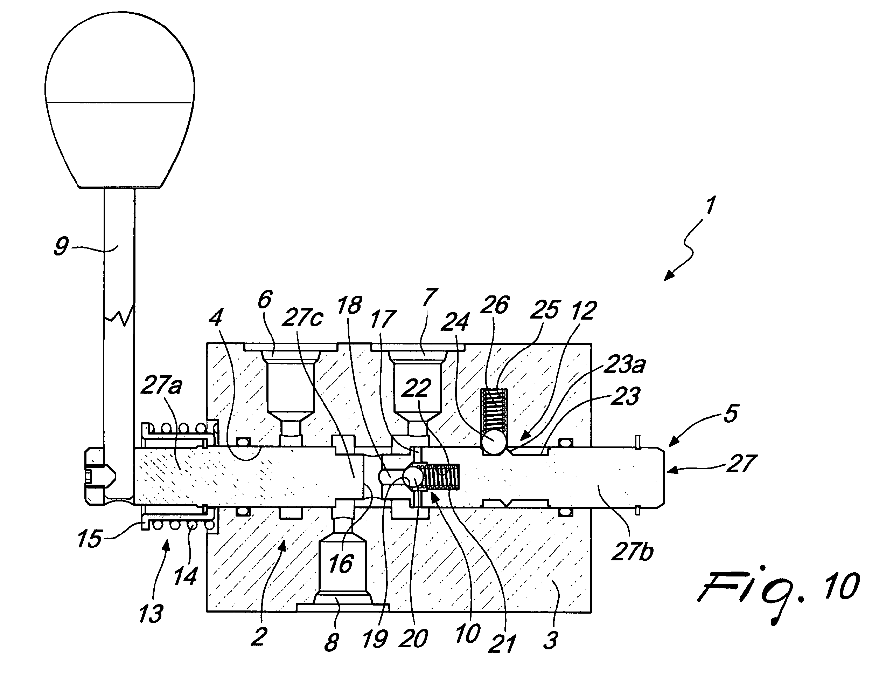

According to a first embodiment (Figures 1-10) of the device 1, the adjustment valve 10 is arranged upstream of the discharge port 7 and is interposed between the service port and the discharge port, respectively 8 and 7.

The adjustment valve 10 in fact is integrated in the flow control means 5 and the distribution valve 2 is of the three-way type, a single discharge port 7 being provided.

In Figure 1, the flow control means 5 are constituted by a simple lever; however, they might also be constituted instead by a piston lever, a pedal, an electro-mechanical element or others.

Figures 2 to 4 show schematically variations of the device 1 of the previous figure.

In particular, the device 1 may have conventional means 11 for maintaining the position, which are associated with the actuation means 9 or with the flow control means 5 in order to maintain at least one working position.

In greater detail, the device 1 of Figure 2 comprises means 11 for maintaining the position which act directly on the flow control means 5, while the device of Figure 3 has actuation means 9 of the type of a piston lever that cooperates with means 11 for maintaining the position.

As an alternative, means 12 for temporary retention of the distribution valve 2 at the second working position and/or elastic means 13 for the return of such valve from the third working position to the first one may be provided.

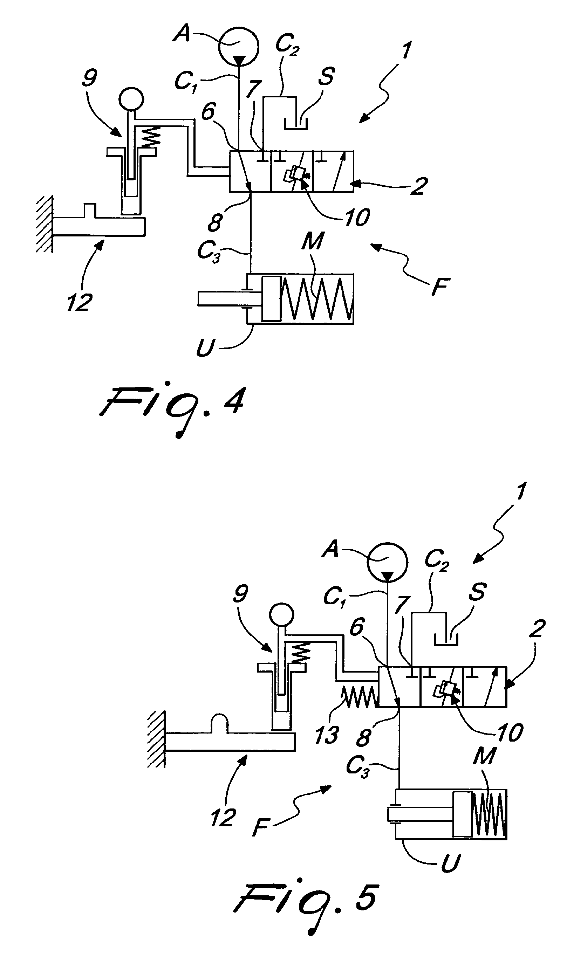

Figure 4 shows schematically a variation of the device 1 of the preceding figures, provided with temporary retention means 12 that cooperate with actuation means 9, constituted by a piston lever.

Moreover, Figures 5, 6 and 7 illustrate a further variation provided with retention means 12 that cooperate with actuation means 9 constituted by a piston lever and with elastic return means 13 that act on the flow control means 5, respectively in the first, third and second working condition.

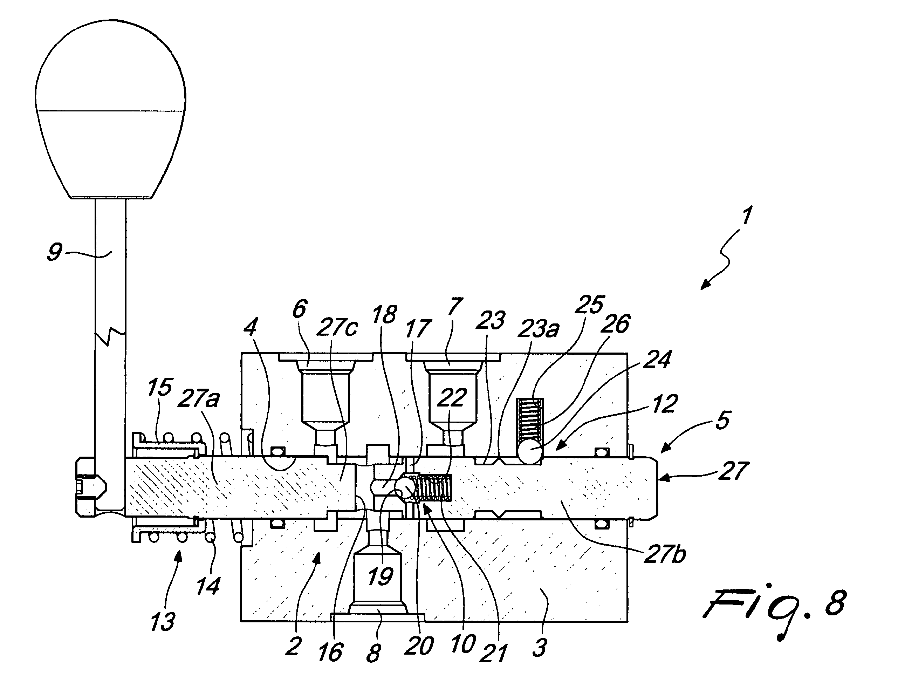

Figures 8, 9 and 10 show a possible embodiment of the device of the preceding figures. In these figures the flow control means 5 are of the linear type and are constituted by a conventional slide valve. However, the distribution valve 2 might be shaped differently, providing for example flow control means of the rotary type.

The valve body 3 is therefore provided with an axial seat 4, along which the intake port 6, the discharge port 7 and the service port 8, which is interposed between the previous two, open.

The flow control means 5 are constituted by a stem 27, which is inserted so that it can slide in an axial direction and hermetically inside the seat 4 and has the end portions 27a and 27b whose diameter substantially coincides with the diameter of the seat 4 and has a central portion 27c that has a reduced diameter in order to allow connection between the above mentioned ports according to its axial position.

The actuation lever 9 is connected to the tip of the end portion 27a, which protrudes from the valve body 3, and the elastic return means 13 also are associated with such tip and comprise a helical compression spring 14, which is fitted on the end portion 27a proximate to the actuation lever 9 and is interposed between the valve body 3 and a cup-shaped element 15, which is axially fixed to such end portion.

At the central portion 27c there is, in the stem 27, a first through hole 16, which runs transversely to the longitudinal axis of the seat 4, which in the third working position is arranged at the service port 8. In the end portion 27b there is a second through hole 17, which is oriented like the previous one and which in the third working position is arranged at the discharge port 7.

Between the first hole and the second hole, respectively 16 and 17, in the stem 27 there is an axial connecting duct 18, which at the end directed toward the second hole 17 is shaped so as to form the sealing seat 19 against which a ball-shaped flow control element 20 is kept pressed by a first compression spring 21 accommodated in a cavity 22 which is provided inside the stem 27 and is aligned axially with the duct 18.

The adjustment valve 10 is, therefore, integrated in the stem 27, which defines its body, and is provided by the flow control element 20 and by the first spring 21.

However, different embodiments of the adjustment valve 10 are not excluded; such valve might be, for example, of the piston type in order to allow the functional advantages explained hereinafter.

In the end portion 27b, moreover, a shaped portion is formed in order to define a surface 23 for supporting slidingly a ball 24 which is accommodated in a recess 25 which is defined on the valve body 3 and opens along the seat 4, so that the ball 24 protrudes partially inside such seat and is kept pressed against the surface 23 by a second compression spring 26 interposed between the bottom of the recess 25 and the ball 24.

The surface 23 has an annular raised portion 23a that must be surmounted by the ball 24 in order to allow to place the stem 27 in the second working position.

The surface 23, the ball 24 and the spring 26 provide the means 12 for temporary retention of the stem 27 in the second working position.

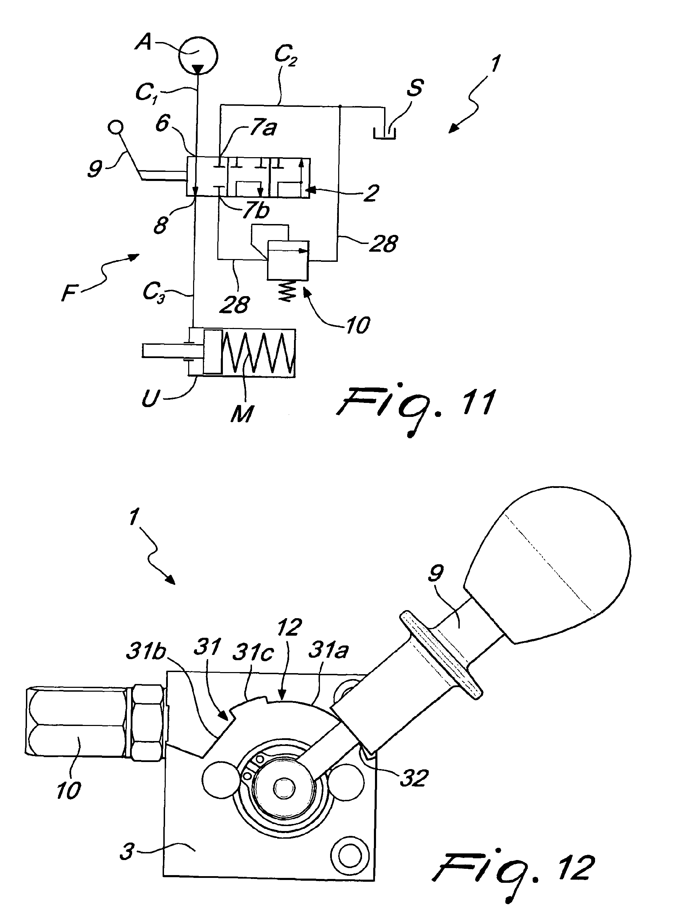

In a second embodiment (Figures 11-17), the distribution valve 2 is of the three-position four-way type and there are two discharge ports 7, of which a first discharge port 7a can be associated directly with the discharge means S and a second discharge port 7b can be associated with such discharge means through an auxiliary branch 28 along which the adjustment valve 10 is arranged.

The adjustment valve 10, therefore, is arranged downstream of the second discharge port 7b with respect to the direction of the flow of working fluid.

In the second working position the service port 8 and at least the first discharge port 7a are connected and the second discharge port 7b also might be connected to such service port.

In the third working position, instead, the service port 8 is connected only to the second discharge port 7b.

Figure 11 shows actuation means 9 of the type of a simple lever, which can be replaced, for example, by a piston lever, a pedal, an electromechanical actuation device or others.

Moreover, in this case also there can be means 11 for maintaining the position and/or temporary retention means 12 and optional elastic return means 13 of the type described above.

Figures 12 to 17 illustrate a possible constructive solution of this second embodiment of the invention, which has flow control means 5 of the rotary type; however, different flow control means 5, for example of the linear type, might be present.

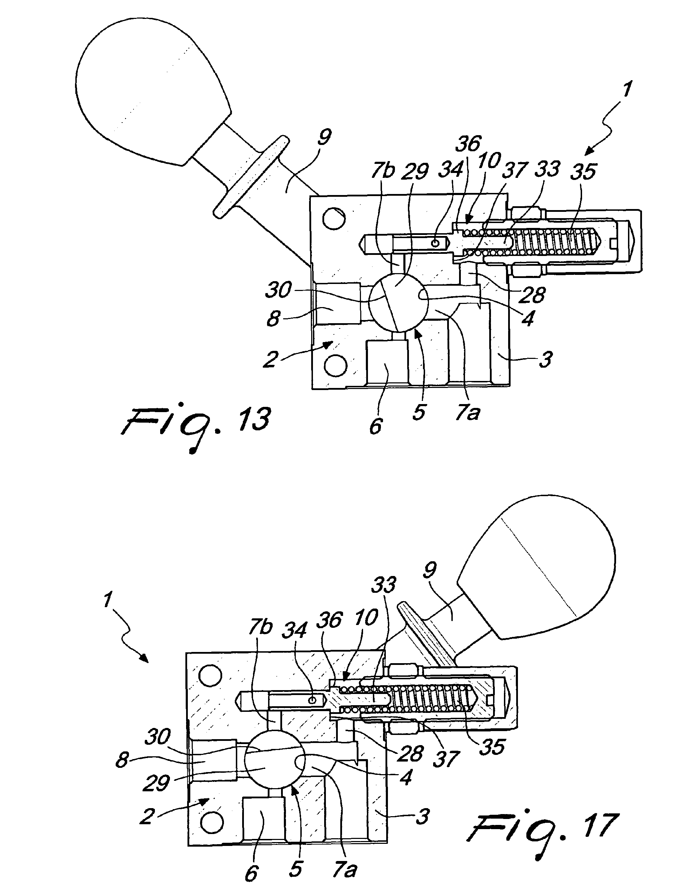

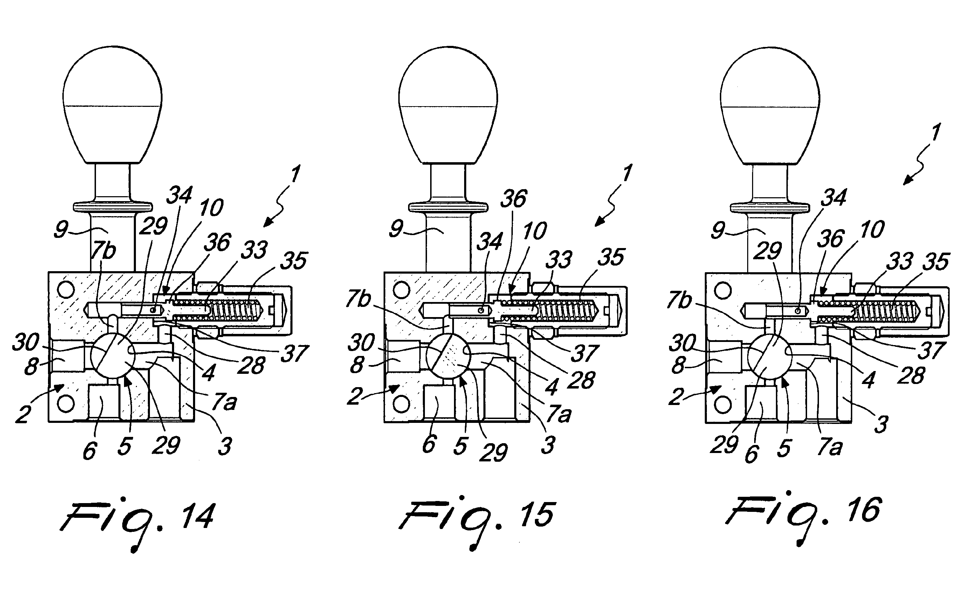

In particular, the flow control means 5 of the illustrated type are constituted by a pivot 29 provided with an axial slot 30, which extends for a portion of its length in the central region of such pivot and is inserted so that it can rotate about its own longitudinal axis within the seat 4, which has a cylindrical shape. Depending on the angular position of the pivot 29, the intake port 6 and the service port 8 (Figure 13, first working position), or the service port 8 and the second discharge port 7b (Figures 14-16, third working position), or the service port 8 and at least the first discharge port 7a (Figure 17, second working position) are alternately connected through the recess defined by the slot 30.

The second discharge port 7b is connected to the auxiliary branch 28 along which there is the adjustment valve 10, preferably of the piston type, which is not described in detail because it is of a conventional type. However, different embodiments of the adjustment valve 10 are not excluded.

Preferably, the auxiliary branch 28 is provided directly in the valve body 3 and the adjustment valve 10 is of the cartridge type so as to be mounted on such valve body.

Moreover, the auxiliary branch 28 leads at the first discharge port 7a so as to have a single connection to the discharge means S.

However, the auxiliary branch 28 and the corresponding adjustment valve 10 might also be provided separately from the valve body 3 and optionally with a separate connection to the discharge means S.

It should be noted that Figures 14, 15 and 16 illustrate respective successive configurations of the distribution valve 2 at the third working position.

In fact, Figure 14 corresponds to an initial instant following the reaching of the third working position: the pressure of the working flow at the user device U opens the adjustment valve 10, allowing discharge toward the discharge means S by passing through, in this order, the service port 8, the second discharge port 7b, the valve itself (which is open), and the auxiliary branch 28.

In this condition, the axial position of the piston 33 of the adjustment valve 10 allows the connection of the second discharge port 7b to the discharge means S through the hole 34 provided in such piston and arranged open along the auxiliary branch 28.

Figure 15 instead corresponds to a subsequent instant, in which the pressure at the user device U is lower than the set pressure value of the adjustment valve 10, which therefore has closed again. The distribution valve 2 thus isolates the user device U both from the discharge means S and from the supply means A, allowing to keep the pressure at the user device U stable for a certain time apart from laminar leakage.

In fact, the axial position of the piston 33 of the adjustment valve 10 is such as to prevent the passage of working fluid through the hole 34, but the piston 33, pushed by the corresponding spring 35, can still perform a translational motion by a set overtravel, until the annular protrusion 36 of such piston abuts against the shoulder 37 (Figure 16), obtaining a pumping effect of the working fluid, with consequent compensation of any laminar leakage.

If the device 1 provided with a piston-type adjustment valve 10 is applied to a circuit F, this behavior allows to guarantee the completion of emergency braking in the third working position.

Figure 12 shows the means 12 for temporary retention of the actuation means 9, which are constituted by a conventional piston lever, not described in detail, in the second working position.

The temporary retention means 12 consist of a profile 31 which is shaped in relief on the outer wall of the valve body 3 faced by the piston lever 9.

The profile 31 has a first portion 31a and a second portion 31b, which are adjacent and shaped so as to define respective arcs of a circumference which is centered at the pivoting axis of the piston lever 9, which coincides with the longitudinal axis of the pivot 29, which are mutually separated by a step 31c that protrudes radially with respect to such portions.

The piston lever 9 is provided with an annular raised portion 32 that rests slidingly on the profile 31.

In the first working position, the piston lever is arranged as in Figure 12; in order to pass to the third working position, the operator must turn such lever counterclockwise with respect to Figure 12, making it abut against the step 31 c, while in order to place it in the second working position the operator must actuate the piston lever 9 so as to pass over the step 31c and arrange it at the second portion 31b.

The step 31 c prevents the piston lever 9 from accidentally moving from the second working position.

Moreover, elastic return means 13 may be present which, in case of release of the piston lever 9 in the third working position, cause automatic return to the first working position.

In practice it has been found that the described invention achieves the intended aim and objects and in particular the fact is stressed that the device according to the invention is simple, economic and flexible in application. Moreover, in the case of application in actuation circuits of negative brakes, the device according to the invention allows to manage in safe conditions both parking braking and emergency braking, in which the braking power of the circuit is kept fixed in relation to the setting of the pressure adjustment valve provided by the manufacturer.

The invention thus conceived is susceptible of numerous modifications and variations, all of which are within the scope of the appended claims.

In practice, the materials used, as well as the contingent shapes and dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A flow adjustment device (1), comprising a distribution valve (2), which comprises a valve body (3) provided with a seat (4), which movably accommodates flow control means (5), with an intake port (6), which can be associated with means (A) for supplying a working fluid, with at least one discharge port (7; 7a, 7b), which can be associated with means (S) for discharging said working fluid and with a service port (8), which can be associated with a user device (U) with a fluid medium, said ports (7; 7a, 7b; 6; 8) being connected to said seat (4), and actuation means (9) for actuating the movement of said flow control means (5) within said seat (4), the flow control means (5) being adapted to assume alternately at least one first working position, in which they allow the connection of said intake port (6) and said service port (8), and a second working position, in which they allow the connection of said service port (8) and of said at least one discharge port (7; 7a), so as to obtain direct connection to said discharge means (S), **characterized in that** said distribution valve (2) is of the type with three working positions, a third working position being also provided in which said flow control means (5) allow the connection of said service port (8) to said at least one discharge port (7; 7b) so as to obtain connection to said discharge means (S) by passing through a pressure adjustment valve (10), which is associated with said distribution valve (2) upstream or downstream of said at least one discharge port (7; 7b).

2. The device (1) according to claim 1, **characterized in that** said adjustment valve (10) is integrated in said flow control means (5) and said distribution valve (2) is of the three-way type, being provided with a single discharge port (7).

3. The device (1) according to claim 1, **characterized in that** said distribution valve (2) is of the four-way type, there being two of said discharge ports (7a, 7b), a first discharge port (7a) being directly associable with said discharge means (S) and a second discharge port (7b) being associable with said discharge means (S) through an auxiliary branch (28), along which said adjustment valve (10) is arranged, the service port (8) being connected, in the second and third working positions, respectively to at least the first discharge port (7a) and only to the second discharge port (7b).

4. The device (1) according to one or more of the preceding claims, **characterized in that** said adjustment valve (10) is of the adjustable type.

5. The device (1) according to one or more of the preceding claims, **characterized in that** said adjustment valve (10) is of the type with a piston (33).

6. The device (1) according to one or more of the preceding claims, **characterized in that** said flow control means (5) are of the linear type (27).

7. The device (1) according to one or more of claims 1 to 5, **characterized in that** said flow control means (5) are of the rotary type (29).

8. The device (1) according to one or more of the preceding claims, **characterized in that** it comprises means (11) for maintaining position, which are associated with said actuation means (9) and/or with said flow control means (5) to maintain at least one of said working positions.

9. The device (1) according to one or more of claims 1 to 7, **characterized in that** it comprises means (12) for temporary retention of said distribution valve (2) at the second working position and elastic means (13) for the return of said valve from the third working position to the first working position.

10. The device (1) according to one or more of the preceding claims, **characterized in that** said actuation means (9) comprise a piston lever.

11. A circuit (F) for braking a work vehicle, **characterized in that** it comprises a device (1) for adjusting flow according to one or more of the preceding claims, arranged so that said service port (8) is associated with the cylinder (U) for actuating the release of a negative brake and can be actuated in the first working position to release said brake, in the second working position for parking braking, and in the third working position for emergency braking.

## Patentansprüche

1. Durchflusseinstellvorrichtung (1), umfassend
ein Verteilventil (2), das einen Ventilkörper (3) aufweist, der mit einem Sitz (4) ausgestattet ist, der Durchflusssteuermittel (5) beweglich aufnimmt, mit einem Eingangsanschluss (6), der mit Mitteln (A) zum Bereitstellen eines Arbeitsfluides verbunden werden kann, wenigstens einem Auslassanschluss (7; 7a, 7b), der mit Mitteln (S) zum Auslassen des Arbeitsfluides verbunden werden kann, und einem Betriebsanschluss (8), der mit einer Benutzervorrichtung (U) mit einem Fluidmedium verbunden werden kann, wobei die Anschlüsse (7; 7a, 7b; 6; 8) mit dem Sitz (4) verbunden sind, und
Betätigungsmittel (9) zum Erreichen einer Bewegung der Durchflusssteuermittel (5) in dem Sitz (4), wobei die Durchflusssteuermittel (5) eingerichtet sind, um alternativ wenigstens eine erste Arbeitsposition, in der sie eine Verbindung des Eingangsanschlusses (6) mit dem Betriebsanschluss (8) erlauben, und eine zweite Arbeitsposition anzunehmen, in der sie eine Verbindung des Betriebsanschlusses (8) mit dem wenigstens einen Auslassanschluss (7; 7a) erlauben, um so eine direkte Verbindung zu den Auslassmitteln (S) zu erreichen, **dadurch gekennzeichnet, dass** das Verteilventil (2) von einem Typ mit drei Arbeitspositionen ist, wobei eine dritte Arbeitsposition ebenfalls bereitgestellt wird, in der die Durchflusssteuermittel (5) eine Verbindung des Betriebsanschlusses (8) mit dem wenigstens einen Auslassanschluss (7; 7b) erlauben, um eine Verbindung mit den Auslassmitteln (S) durch einen Durchfluss durch ein Druckeinstellventil (10) zu erreichen, das mit dem Verteilventil (2) stromaufwärts oder stromabwärts des wenigstens einen Auslassanschlusses (7; 7b) verbunden ist.

2. Vorrichtung (1) nach Anspruch 1, **dadurch gekennzeichnet, dass** das Einstellventil (10) in den Durchflusssteuermitteln (5) integriert ist, und dass das Verteilventil (2) von dem Dreiwege-Typ ist und mit einem einzelnen Auslassanschluss (7) ausgestattet ist.

3. Vorrichtung (1) nach Anspruch 1, **dadurch gekennzeichnet, dass** das Verteilventil (2) von einem Vierwege-Typ ist, wobei zwei Auslassanschlüsse (7a, 7b) vorhanden sind, wobei ein erster Auslassanschluss (7a) direkt mit den Auslassmitteln (S) verbindbar ist und ein zweiter Auslassanschluss (7b) mit den Auslassmitteln (S) durch einen Hilfszweig (28) verbindbar ist, entlang dessen das Einstellventil (10) angeordnet ist, wobei der Betriebsanschluss (8) in der zweiten und dritten Arbeitsposition wenigstens mit dem ersten Auslassanschluss (7a) bzw. nur mit dem zweiten Auslassanschluss (7b) verbunden ist,

4. Vorrichtung (1) nach einem oder mehreren der vorstehenden Ansprüche, **dadurch gekennzeichnet, dass** das Einstellventil (10) von einem einstellbaren Typ ist.

5. Vorrichtung (1) nach einem oder mehreren der vorstehenden Ansprüche, **dadurch gekennzeichnet, dass** das Einstellventil (10) von dem Typ mit einem Kolben (33) ist.

6. Vorrichtung (1) nach einem oder mehreren der vorstehenden Ansprüche, **dadurch gekennzeichnet, dass** die Durchflusssteuermittel (5) von dem linearen Typ (27) sind.

7. Vorrichtung (1) nach einem oder mehreren der Ansprüche 1 bis 5, **dadurch gekennzeichnet, dass** die Durchflusssteuermittel (5) von einem Drehtyp (29) sind.

8. Vorrichtung (1) nach einem oder mehreren der vorstehenden Ansprüche, **dadurch gekennzeichnet, dass** sie Mittel (11) zum Beibehalten einer Position aufweist, die mit den Betätigungsmitteln (9) und/oder mit den Durchflusssteuermitteln (5) verbunden sind, um wenigstens eine der Arbeitspositionen beizubehalten.

9. Vorrichtung (1) nach einem oder mehreren der Ansprüche 1 bis 7, **dadurch gekennzeichnet, dass** sie Mittel (12) zur vorübergehenden Rückhaltung des Verteilventiles (2) in der zweiten Arbeitsposition und elastische Mittel (13) zum Zurückbringen des Ventils aus der dritten Arbeitsposition in die erste Arbeitsposition aufweist.

10. Vorrichtung (1) nach einem oder mehreren der vorstehenden Ansprüche, **dadurch gekennzeichnet, dass** die Betätigungsmittel (9) einen Kolbenhebel aufweisen.

11. Schaltung (F) zum Bremsen eines Arbeitsfahrzeuges, **dadurch gekennzeichnet, dass** sie eine Vorrichtung (1) zum Einstellen eines Durchflusses gemäß einem oder mehreren der vorstehenden Ansprüche aufweist, die so angeordnet ist, dass der Betriebsanschluss (8) mit dem Zylinder (U) zum Betätigen des Lösens einer Negativbremse verbunden ist und in der ersten Arbeitsposition betätigt werden kann, um die Bremse zu lösen, in der zweiten Arbeitsposition zum Bremsen mit einer Feststellbremse und in der dritten Arbeitsposition zum Notbremsen.

## Revendications

1. Dispositif régulateur d'écoulement (1) comprenant une vanne de distribution (2) qui comprend un corps de vanne (3) pourvu d'un siège (4), qui reçoit de manière mobile des moyens de commande d'écoulement (5), avec un orifice d'admission (6), qui peut être associé à des moyens (A) pour délivrer un fluide de travail, avec au moins un orifice de décharge (7 ; 7a ; 7b), qui peut être associé à des moyens (S) pour décharger ledit fluide de travail et avec un orifice de desserte (8), qui peut être associé à un dispositif utilisateur (U) avec un agent fluide, lesdits orifices (7 ; 7a ; 7b ; 6 ; 8) étant raccordés audit siège (4) et des moyens d'actionnement (9) pour actionner le mouvement desdits moyens de commande d'écoulement (5) à l'intérieur dudit siège (4), les moyens de commande d'écoulement (5) étant à même d'assumer en alternance au moins une première position de travail, dans laquelle ils permettent le raccordement dudit orifice d'admission (6) et dudit orifice de desserte (8), et une deuxième position de travail, dans laquelle ils permettent le raccordement dudit orifice de desserte (8) et dudit au moins un orifice de décharge (7; 7a), de manière à obtenir un raccordement direct avec lesdits moyens de décharge (S), **caractérisé en ce que** ladite vanne de distribution (2) est du type avec trois positions de travail, une troisième position de travail étant également prévue, dans laquelle lesdits moyens de commande d'écoulement (5) permettent le raccordement dudit orifice de desserte (8) avec ledit au moins un orifice de décharge (7 ; 7b) de manière à obtenir un raccordement avec lesdits moyens de décharge (S) par passage à travers une vanne régulatrice de pression (10) qui est associée à ladite vanne de distribution (2) en amont ou en aval dudit au moins un orifice de décharge (7 ; 7b).

2. Dispositif (1) selon la revendication 1, **caractérisé en ce que** ladite vanne régulatrice (10) est intégrée auxdits moyens de commande d'écoulement (5) et ladite vanne de distribution (2) est du type à trois voies, étant munie d'un seul orifice de décharge (7).

3. Dispositif (1) selon la revendication 1, **caractérisé en ce que** ladite vanne de distribution (2) est du type à quatre voies, avec deux desdits orifices de décharge (7a, 7b), un premier orifice de décharge (7a) pouvant être directement associé auxdits moyens de décharge (S) et un second orifice de décharge (7b) pouvant être associé auxdits moyens de décharge (S) via une branche auxiliaire (28) le long de laquelle ladite vanne régulatrice (10) est aménagée, l'orifice de desserte (8) étant raccordé, dans la deuxième et la troisième positions de travail, respectivement au moins au premier orifice de décharge (7a) et seulement au second orifice de décharge (7b).

4. Dispositif (1) selon une ou plusieurs des revendications précédentes, **caractérisé en ce que** ladite vanne régulatrice (10) est du type réglable.

5. Dispositif (1) selon une ou plusieurs des revendications précédentes, **caractérisé en ce que** ladite vanne régulatrice (10) est du type avec un piston (33).

6. Dispositif (1) selon une ou plusieurs des revendications précédentes, **caractérisé en ce que** lesdits moyens de commande d'écoulement (5) sont du type linéaire (27).

7. Dispositif (1) selon une ou plusieurs des revendications 1 à 5, **caractérisé en ce que** lesdits moyens de commande d'écoulement (5) sont du type rotatif (29).

8. Dispositif (1) selon une ou plusieurs des revendications précédentes, **caractérisé en ce qu'**il comprend des moyens (11) de maintien de position, qui sont associés auxdits moyens d'actionnement (9) et/ou auxdits moyens de commande d'écoulement (5) pour maintenir au moins l'une desdites positions de travail.

9. Dispositif (1) selon une ou plusieurs des revendications 1 à 7, **caractérisé en ce qu'**il comprend des moyens (12) pour une rétention temporaire de ladite vanne de distribution (2) dans la deuxième position de travail et des moyens élastiques (13) pour le retour de ladite vanne de la troisième position de travail à la première position de travail.

10. Dispositif (1) selon une ou plusieurs des revendications précédentes, **caractérisé en ce que** lesdits moyens d'actionnement (9) comprennent un levier à piston.

11. Circuit (F) pour freiner un véhicule de travail, **caractérisé en ce qu'**il comprend un dispositif (1) pour réguler l'écoulement selon une ou plusieurs des revendications précédentes, aménagé de sorte que ledit orifice de desserte (8) soit associé au cylindre (U) pour actionner la libération d'un frein négatif et puisse être actionné dans la première position de travail pour libérer ledit frein, dans la deuxième position de travail pour le freinage en stationnement et dans la troisième position de travail pour un freinage d'urgence.
